Europäisches Patentamt

European Patent Office

Office européen des brevets

(19)

(11) Publication number: **0 026 960**

**B1**

(12) **EUROPEAN PATENT SPECIFICATION**

(45) Date of publication of patent specification: **11.01.84**

(21) Application number: **80201011.6**

(22) Date of filing: **26.09.78**

(60) Publication number of the earlier application in accordance with Art. 76 EPC: **0001652**

(51) Int. Cl.³: **A 01 D 27/02,
A 01 D 23/06**

(54) **Device for removing leaf of tuberous crop.**

(30) Priority: **25.10.77 NL 7711703**

(43) Date of publication of application:
**15.04.81 Bulletin 81/15**

(45) Publication of the grant of the patent:
**11.01.84 Bulletin 84/2**

(84) Designated Contracting States:
**BE DE FR GB NL**

(56) References cited:
**BE - A - 834 326
DE - A - 2 153 543
FR - A - 1 525 203**

(73) Proprietor: **Heyens, Eugène Joseph Eduardus
176, Zoutestraat
NL-4561 TC Hulst (NL)**

(72) Inventor: **Heyens, Eugène Joseph Eduardus
176, Zoutestraat
NL-4561 TC Hulst (NL)**

(74) Representative: **Hoorweg, Petrus Nicolaas et al,
OCTROOIBUREAU ARNOLD & SIEDSMA
Sweelinckplein 1
NL-2517 GK The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Device for removing leaf of tuberous crop

The invention relates to a device for removing leaf and topping tuberous crop on the field, comprising a frame (1) adapted to be moved over said field and carrying a driven rotor for stripping the leaf of said crop, means for feeding off the stripped leaf, cutting means for cutting-off the top part of the crop arranged in close proximity behind said leaf stripping rotor and being adapted to move up and down with respect to said rotor.

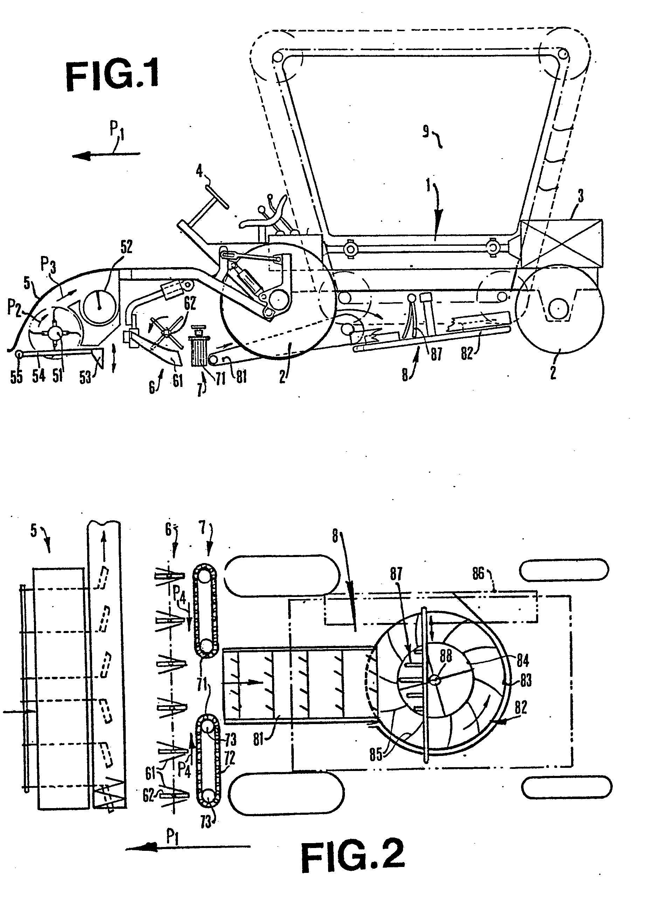

Such a device is disclosed in the German patent application 2.153.543, in particular figure 2, said device having the cutting means in close proximity behind the leaf stripping rotor in order to diminish the overall length of the device and so the overall length of a mobile apparatus for lifting tuberous crop from the field. In such an embodiment the mobile apparatus will be manoeuvered over the field easily, since a small deviation to the left or the right will not immediately bring the leaf stripping rotor beside the row of crop, which should lead to partly or wholly non-stripped crop.

The device as disclosed in the above mentioned German reference is however provided with cutting means which are mounted on a pushing arm, said arm being considerably short in order to obtain the above mentioned short overall length. This leads to the disadvantage that the position of the cutting means is changed over a considerably large angle, which will affect the cutting action adversely.

The object of the invention is to diminish the overall length of the device and to have the cutting means constantly in an optimal cutting position.

The device according to the invention is distinguished in that said cutting means are mounted on a pivotal arm adapted to move up and down, the pivotal shaft of which is arranged in front of said leaf stripping rotor.

Owing to the relatively large pivotal arm, said cutting means will always have a horizontal position even when said means are moved up or down.

In the French patent specification 1.525.203 a leaf stripping and cutting device is disclosed, wherein the cutting means are fastened to a pivotal pulling arm, its pivotal shaft is arranged behind the leaf stripping rotor. In this device the cut off top parts of the crop are not taken away by the same leaf stripping rotor as is necessary for obtaining a short overall length of the device.

In the event the devce according to the invention is adapted to strip and top tuberous crop, cultivated in more than one row and provided with a number of leaf stripping rotors and the same number of cutting means, wherein the rotors are mounted on a common shaft extending transverse to the travelling direction, said device is further distinguished in that said pivotal arms of the cutting means are pivotable independently from each other.

The invention is further related to a mobile apparatus for lifting tuberous crop, particularly beet, provided with digging members as disclosed in the parent application no. EP—A—0001652, said mobile apparatus preferably comprising a device as described hereabove. In such a mobile apparatus said cutting members are aligned with said digging members with respect to the travelling direction over the field.

The invention will be explained more fully by the description of one embodiment.

The device shown in figs. 1 to 6 mainly comprises a frame 1 adapted to be moved on four wheels 2 on a field in the direction indicated by the arrow P1. The device is propelled by an engine 3 driving the front wheels of the device, whereas the rear wheels can be steered by the steering wheel near the driver seat 4.

From left to right in fig. 1 the frame 1 carries the following elements:

a combined stripping and topping device 5,
a digging section 6, a transverse conveying section 7 and a longitudinal sieve section 8 and finally on top of the frame 1 there is mounted a bunker 9 for receiving the dug-up crop.

The leaf stripping section 5 mainly consists of a leaf stripping rotor 51 rotating in the direction indicated by the arrow P2 and serving to strike the leaves from the beet. The separated leaves arrive in the direction of the arrow P3 at the leaf remover 52, which laterally conducts the leaves away and deposits them in a swath on the soil at the side of the machine.

According to the invention the leaf stripper 5 comprises one or more cutting members 53, each of which is adapted to move up and down on a pivotal arm 54. The arm 54 is pivotable about a pivotal shaft 55 at the front of the leaf stripping section 5, so that a long distance is obtained between the cutting member 53 and the pivotal shaft 55 and ample freedom of movement is ensured. On the other hand the overall structural length of the leaf stripping section 5 is appreciably shortened. Moreover the cutting members 53 are arranged at such a small distance from the rotor 51 that the severed parts are carried along by the suction effect of the rotor 51 and conducted away via the conveyor 52.

The digging section 6 comprises pairs of digging members 61 as described in the Dutch patent application 7513829. Each pair of diging members raises the beet out of the soil so that it will lie on the surface of the soil, whilst the separating members 62 raise the beet further upwards and transport it to the rear.

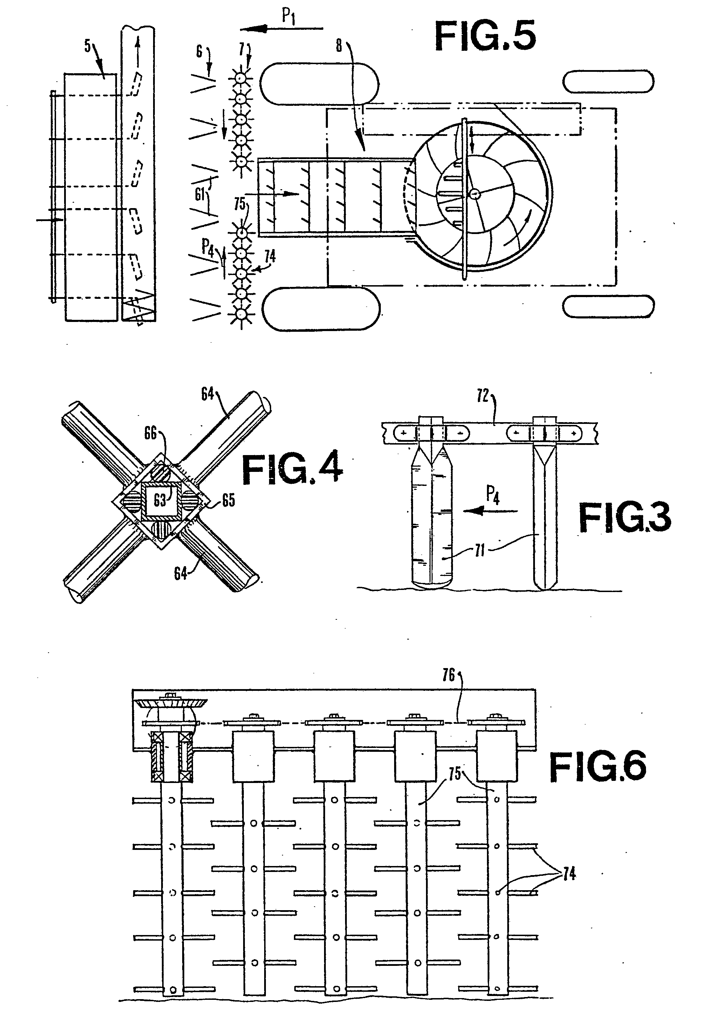

The separating members are formed by a plurality of rod-shaped elements 64 radially mounted on a common driving shaft 63 (see fig. 4). The rod-shaped elements are fastened to a hub 65, which has a square cross-section like the driving shaft 63. The diagonal of the outer circumference of the driving shaft 63 is equal to the inner width of the hub 65 so that they can both be turned relatively to one another through an angle of 45°. The remaining space is filled out by cylindrical elements 66 at the corners of the hub 65, said elements being preferably made from an elastic material, for example rubber. The elements 66 prevent the driving shaft 63 from rotating with respect to the hub 65, but they ensure an elastic transmission of the driving forces. In the embodiment shown the separating members are mounted each on an individual hub 65. It will be obvious that as an alternative a common hub may be used along the whole length of the driving shaft 63. The driving gear of the rotary shaft 63 may be constructed in any appropriate manner and does not belong to the scope of this invention.

From the plan view of fig. 2 it will be apparent that the separating members 62 are disposed between the pairs of digging members 61 as well as between the digging members of a pair.

In the embodiment shown the section 7 conveying in a transverse direction is formed by two conveying elements located each behind those digging members which are located at the side of the conveying section 8 in the transport direction. The conveying elements 71 each consist of a sequence of vertically or substantially vertically extending tines moving along a closed path. On the side of the closed path of the vertical tines 71 facing the digging members 61 the beet raised above the soil will be conveyed in the direction indicated by the arrow P4 towards the centre of the device so that all beets arrive at the front of the conveying section 8.

In the transverse conveyors 7 the vertically extending tines 71 are fastened to an endless, flexible element 72, which is guided around two reversing elements 73 rotating about a vertical axis. One of the shafts of the reversing elements 73 is driven so that the tines will describe the compulsory path.

In a preferred embodiment the tines have a non-circular cross-section (see fig. 3) so that the same tines can be mounted in two positions with respect to the flexible element 72 (see the difference in mounting on the left- and righthand sides of fig. 3). Obviously both the resistance exerted by the soil and the distance between the tines can thus be varied at will.

The conveying section 8 is formed by an elevator 81, the front end of which joins the delivery ends of the transverse conveyors 7 and the rear end of which terminates above a rotating wheel 82 of the conveying section. The elevator 81 may be constructed in any way and is formed in the embodiment shown by an endless belt, which preferably constitutes, in addition, a sieve belt in order to carry out a first separation between the crop and the earth.

The rotating wheel 82 is equipped with an outer rim 83 and a concentric inner rim 84. Between these two rims extend rod-like elements 85 substantially in a radial direction, which carry along the tubers in the direction indicated by the arrow P5 (see fig. 2) and deliver them on a conveying belt 86 lying out of the scope of this invention for transport to the bunker 9.

Above the region enclosed by the inner rim 84 a grating 87 is arranged, against which the tubers carried by the elevator 81 are thrown. By this grating an effective cleaning of the tubers is ensured, since the earth is pushed off the tubers as a result of the change in the direction of movement. The loosened earth can drop unhindered through the grating 87 across the region inside the inner rim 84, since only four spokes are arranged between the driving shaft 88 and the inner rim 84 for rotating the wheel around the shaft 88.

It will be obvious that the grating 87 may have any shape and can extend through the full region inside the inner rim 84.

Figs. 5 and 6 illustrate an alternative embodiment of the transverse conveying element.

The pins moved along a closed path are formed in this case by radially directed groups of pins 74, each group being fastened to an upwardly extending rotatable shaft 75.

The shafts are all driven in the same sense by appropriate driving means, in this case a chain 76, so that on the side facing the digging members 61 the pins 74 again perform a conveying operation in the direction of the arrows P4 in fig. 5.

## Claims

1. A device for removing leaf and topping tuberous crop on the field, comprising a frame (1) adapted to be moved over said field and carrying a driven rotor (51) for stripping the leaf of said crop, means (52) for feeding off the stripped leaf, cutting means (53) for cutting-off the top part of the crop arranged in close proximity behind said leaf stripping rotor (51) being adapted to move up and down with respect to said rotor, characterized in that, said cutting means are mounted on a pivotal arm (54) adapted to move up and down, the pivotal shaft (55) of which is arranged in front of said leaf stripping rotor (51).

2. A device as claimed in claim 1 adapted to strip and top tuberous crop, cultivated in more than one row, and provided with a number of leaf stripping rotors (51) and the same number of cutting means (53), wherein the leaf stripping rotors are mounted on a common shaft (55) extending transverse to the travelling direction, and wherein said pivotal arms of the cutting means are pivotable independently of each other.

3. A mobile apparatus for lifting tuberous crop particularly beet, provided with digging members (61), comprising a device according to anyone of the claims 1 and 2.

4. A mobile apparatus as claimed in claim 2, characterized in that with respect to the travelling direction over the field said cutting members (53) are aligned with said digging members (61).

## Patentansprüche

1. Vorrichtung zum auf dem Land Entblättern und Entkopfen von Rüben, umfassend ein Gestell (1) das eingerichtet ist zum über das Land Bewegen und das einen Rotor (51) zum Entblättern der Rüben trägt, Mittel (52) zum Fördern der gelösten Blätter, Schneidmittel (53) zum Abschneiden der Kopfteile der Rüben, welche Schneidmittel (53) nahe hinter dem Rotor (51) angeordnet sind und auf- und abwärts bezüglich des Rotors (51) beweglich sind, dadurch gekennzeichnet, dass die Schneidmittel an einem Dreharm (54) angeordnet sind, welcher auf- und abwärts beweglich ist, wobei die Drehachse (55) desselben vor dem Entblätterungsrotor angeordnet ist.

2. Vorrichtung nach Anspruch 1, die zum Entblättern und zum Entkopfen von Rüben die in mehr als eine Reihe gewachsen sind, einge-richtet ist, welche Vorrichtung mit einer Anzahl von Entblätterungsrotoren (51) und einer gleichen Anzahl von Schneidmitteln (53) versehen ist, wobei die Entblätterungsrotoren auf einer gemeinsamen Achse (55) montiert sind, welche sich quer Zum Fortbewegungsrichtung der Vorrichtung erstreckt und wobei die Dreharme der Schneidmittel unabhängig voneinander drehbar sind.

3. Bewegliches Apparat zum Heben von Rüben das mit Graborganen (61) versehen ist und das eine Vorrichtung nach einem der Ansprüche 1 und 2 umfasst.

4. Bewegliches Apparat nach dem Anspruch 2, dadurch gekennzeichnet, dass mit Bezug auf die Fortbewegungsrichtung über das Land die Schneidorgane (53) mit den Graborganen (61) fluchten.

## Revendications

1. Dispositif pour effeuiller et étêter les récoltes de tubercules dans les champs, comprenant un cadre (1) adapté pour être déplacé au-dessus dudit champ et transportant un rotor (51) entrainé pour arracher le feuillage desdites récoltes, des moyens (52) pour retirer le feuillage arraché, des moyens de coupe (53) pour couper la partie supérieure des récoltes disposés à proximité immédiate derrière ledit rotor (51) d'arrachage du feuillage étant adaptés pour se déplacer vers le haut et vers le bas par rapport audit rotor, caractérisé en ce que lesdits moyens de coupe sont montés sur un bras oscillant (54) adapté pour se déplacer vers le haut et vers le bas, et dont l'arbre de rotation (55) est disposé en avant dudit rotor (51) d'arrachage du feuillage.

2. Dispositif suivant la revendication 1, adapté pour effeuiller et étêter les récoltes de tubercules, cultivées sur plus d'un rang, et muni d'un certain nombre de rotors (51) d'arrachage du feuillage et du même nombre de moyens de coupe (53), dans lequel les rotors d'arrachage du feuillage sont montés sur un arbre commun (53) s'étendant transversalement à la direction du déplacement, et dans lequel lesdits bras oscillants des moyens de coupe sont articulés indépendamment l'un de l'autre.

3. Appareil mobile pour soulever des récoltes de tubercules et plus particulièrement des beteraves, muni de moyens de fouille (61), comprenant un dispositif suivant l'une quelconque des revendications 1 et 2.

4. Appareil mobile suivant la revendication 2, caractérisé en ce que lesdits moyens de coupe (53) sont alignés avec lesdits moyens de fouille (61) par rapport à la direction du déplacement sur le champ.

# FIG.1

# FIG.2

FIG.5

FIG.4

FIG.3

FIG.6